(19) Europäisches Patentamt
European Patent Office
Office européen des brevets

(11) **EP 2 648 884 B1**

(12) **EUROPÄISCHE PATENTSCHRIFT**

(45) Veröffentlichungstag und Bekanntmachung des Hinweises auf die Patenterteilung:
**01.07.2015 Patentblatt 2015/27**

(51) Int Cl.:
***B29C 47/20*** *(2006.01)* ***B29C 47/70*** *(2006.01)*

(21) Anmeldenummer: **11779131.9**

(22) Anmeldetag: **26.10.2011**

(86) Internationale Anmeldenummer:
**PCT/EP2011/068706**

(87) Internationale Veröffentlichungsnummer:
**WO 2012/076245 (14.06.2012 Gazette 2012/24)**

(54) **FOLIENBLASKOPF**

BLOWN FILM DIE

TETE DE SOUFFLAGE DE FILM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.12.2010 DE 102010053775**

(43) Veröffentlichungstag der Anmeldung:
**16.10.2013 Patentblatt 2013/42**

(73) Patentinhaber: **Windmöller & Hölscher KG**
**49525 Lengerich (DE)**

(72) Erfinder:
• **BACKMANN, Martin**
**49525 Lengerich (DE)**
• **SENSEN, Klemens**
**49525 Lengerich (DE)**

(56) Entgegenhaltungen:
**DE-U1- 20 307 412 US-A- 3 809 515**
**US-A- 5 045 254 US-A- 5 716 650**

EP 2 648 884 B1

**Beschreibung**

Die Erfindung betrifft einen Folienblaskopf zur Herstellung eines Folienschlauchs aus ein- oder mehrschichtiger Folie. Derartige Folienblasköpfe sind bekannt.

In der Regel ist ihnen gemein, dass ihnen Schmelze von einem oder mehreren Extrudern zugeführt wird. Diese Schmelze durchläuft oft einen Vorverteiler, von dem Schmelze auf eine größere Anzahl von Schmelzeleitungen verteilt wird. Bei ihrem weiteren Verlauf durch den Blaskopf münden die Schmelzeleitungen in Schmelzespalte, die durch ihre flache flächenmäßige Ausprägung den in seinem Querschnitt kreiszylinderförmigen Schmelzestrang, der aus den Schmelzeleitungen tritt, in eine Folie oder eine Folienschicht umformen können. Falls eine einschichtige Folie hergestellt wird, wird ein einziger derartiger Spalt gebraucht. Bei der Herstellung einer Folie mit einer Anzahl n von Schichten werden in der Regel auch n solcher Spalte gebraucht.

Nach der Einmündung der Schmelzeleitung in den Schmelzespalt gehen die Schmelzeleitungen in Schmelzekanäle über, die von Vertiefungen in einer oder in beiden Begrenzungswänden des Schmelzespaltes gebildet werden. Die Schmelzekanäle verlaufen entlang der Begrenzungswände des Schmelzespaltes, um Schmelze im Schmelzespalt zu verteilen. Bei ihrem Verlauf in dem Schmelzespalt verjüngen sich die Schmelzekanäle immer mehr, bis sie schließlich ganz in den Schmelzespalt übergehen.

Die Druckschriften EP 1055504 B1, DE20307412 U1 sowie US 5716 650 B zeigen unter anderem die vorgenannten Tatsachen. Bei einem Vergleich des grundsätzlichen Aufbaus der in den drei Druckschriften dargestellten Blasköpfe fallen jedoch grundsätzliche Unterschiede auf:

Die US 5,716,650 B zeigt einen Folienblaskopf, der im Wesentlichen aus einem Stapel runder Platten besteht, die in ihrer Mitte eine runde Ausnehmung haben (runde Lochscheiben). Die Außendurchmesser und der Durchmesser der runden Ausnehmung sind bei den runden Platten eines Blaskopfes gleich. Der Stapel runder Platten ist - im Bereich der runden Ausnehmung - mit einem Innendorn versehen und hat insgesamt eine Kreiszylinderform. Die Schmelze wird dem gezeigten Mehrschichtblaskopf mit zunächst extern verlaufenden Schmelzeleitungen in radialer Richtung von außen zugeführt. Die einzelnen Platten definieren die einzelnen Schmelzespalte, die jeweils eine Folienschicht bilden. Die Schmelzeleitungen leiten die Schmelze den Spalten zu. Nach Erreichen der Spalte wandeln sich die Schmelzeleitungen zu Schmelzekanälen, die in dem Folienspalt spiralförmig in Richtung auf das Zentrum des Kreiszylinders zustreben. In der Regel werden die Schmelzeleitungen lediglich von einer Nut in einer der beiden den jeweiligen Spalt begrenzenden Platten gebildet. Die US 5,716,650 B zeigt jedoch einen Folienblaskopf, bei dem die Kanäle von Nuten in beiden den jeweiligen Spalt begrenzenden Platten gebildet werden.

Bei ihrem Weg in Richtung auf das Zentrum des Blaskopfes verjüngen sich die spiralartig verlaufenden Nuten (ihre Tiefe in den Spaltwänden nimmt ab) bis die Nuten ganz enden. An den Stellen, an denen die Nuten enden, ist die Schmelze ganz in den Spalt übergegangen. Auf ihrem restlichen Weg durch den Spalt wird die Schmelze weiter auf ihre "neue" flächige Form festgelegt. Schließlich enden die Spalte, die die Folieneinzelschichten bilden, indem sie in den Mehrschichtspalt, der zwischen dem Innendorn und den Platten besteht, einmünden. Durch die Einmündung der verschiedenen Folienschichten entsteht hier ein Schmelzestrom, der die Schichten der späteren Mehrschichtfolie bereits beinhaltet. Die Extrusion dieses Schmelzestromes erfolgt durch einen Ringspalt, der typisch für Folienblasköpfe ist. Folienblasköpfe der vorstehend beschriebenen Art, die aus einem Plattenstapel gebildet sind, werden oft in Anlehnung an den englischen Sprachgebrauch "Stack Die" genannt.

Die EP 1055504 B1 zeigt einen solchen Stack Die, der im Aufbau jedoch einige strukturelle Unterschiede zu dem Stack Die der US 5,716,650 B aufweist.

In den Mehrschichtspalt münden Einzelspalte, die in der radialen Richtung des Blaskopfes von innen und von außen an den Mehrschichtspalt herangeführt werden. Einzelne Scheiben weisen konische Formen auf. Oft ist die Verwendung eines Schmelzevorverteilers, der Schmelze im Inneren eines geschlossenen Bauteils auf mehrere Leitungen verteilt, im Zusammenhang mit einem solchen Folienblaskopf zu empfehlen.

Eine alternative Bauform eines Folienblaskopfes wird in der DE 203 07 412 U1 dargestellt. Bei diesen Blasköpfen verlaufen bereits die Schmelzespalte, die die Einzelschichten bilden, kreiszylinderförmig um die Hauptsymmetrieachse des ebenfalls kreiszylinderförmigen Blaskopfes.

Entlang dieser Schmelzespalte verlaufen Schmelzekanäle in der Art von Wendeln, die sich ebenfalls in Richtung auf die Einmündung des Schmelzekanals in einen gemeinsamen Schmelzekanal am oberen axialen Ende des Blaskopfes durch die Abnahme ihrer Tiefe in den Begrenzungswänden der Schmelzekanäle verjüngen, bis sie ganz in den Schmelzekanals übergehen. Festzuhalten ist, dass auch die DE 203 07 412 U1 im Gegensatz zu vielen anderen Dokumenten des Standes der Technik Schmelzekanäle zeigt, die durch Ausnehmungen in beiden Begrenzungswänden der Schmelzekanäle gebildet werden.

Die US 3 809 615 zeigt Ausführungsbeispiele von Blasköpfen, die denen in der US 5 716 650 ähneln. In einem weiteren Ausführungsbeispiel sind die Schmelzekanäle in einem In dem Schmelzespalt angeordneten Block symmetrisch angeordnet.

Offenbar soll sowohl durch die DE 203 07 412 U1 als auch durch die US 5,716,650 B vermieden werden, dass sich Streifen oder Stippen in der Folie bilden. Jedoch vermögen auch die in diesen beiden Druckschriften vorgeschlagenen Maßnahmen die Bildung von Streifen und Stippen nicht völlig abzustellen, so dass das Bedürfnis der Fachwelt nach einer Abhilfe zu diesen beiden Problemen fortbesteht.

Die Aufgabe der vorliegenden Erfindung ist es daher, einen Folienblaskopf vorzuschlagen, mit dem Folie mit weniger Stippen und Streifen herstellbar ist.

Oberbegrifflich geht die vorliegende Erfindung von einem Blaskopf nach der US 5,716,650 B aus und löst diese Aufgabe durch die Beifügung der Merkmale des kennzeichnenden Teils des Anspruchs 1.

Überraschenderweise hat es sich gezeigt, dass die Bildung von Stippen und Ähnlichem nachlässt, wenn in einem Bereich des zumindest einen

Schmelzekanals der Schmelzekanal lediglich von Ausnehmungen in einer der beiden Begrenzungswände des Schmelzekanals gebildet wird. Dieser Umstand kann damit zusammenhängen, dass durch die genannte Maßnahme der komplette Schmelzestrang auf eine Seite des Schmelzespaltes gepresst und damit besser durchgewalkt wird. Diese Maßnahme erzielt eine noch bessere Wirkung, wenn der Schmelzestrang zu Beginn des Schmelzekanals in einer Form runden oder ovalen Querschnitts verbleibt. Hierbei kann er sich, wenn der runde oder ovale Querschnitt zum Schmelzespalt symmetrisch ist, am Anfang also gleichmäßig im Bereich der beiden Begrenzungswände verteilen. Aus diesen Ausführungen ist auch zu entnehmen, dass es vorteilhaft ist, wenn der Schmelzekanal in seinem Anfangsbereich von Ausnehmungen in seinen beiden Begrenzungswänden gebildet wird.

Wenn die Tiefe der Ausnehmungen, welche den Schmelzekanal bilden, in zumindest einer der beiden Begrenzungswände in zumindest einem Abschnitt des Schmelzekanals in der Transportrichtung der Schmelze zunimmt, wird das Durchwalken der Schmelze in dem Kanal gefördert. Dieser Effekt tritt auch dann auf, wenn die Tiefe in beiden Wänden zunimmt. Durch diese Maßnahme steigt allerdings das Volumen des Schmelzekanals relativ stark, so dass ein Zurückströmen von Schmelze aus dem Kanal in den Spalt besorgt werden muss. Daher sollte die zuletzt genannte Maßnahme (Zunahme der Tiefe in beiden Wänden in der Transportrichtung der Schmelze) lediglich moderat eingesetzt werden.

Oft werden auch Bereiche eingesetzt, bei denen auf einer Höhe des Schmelzekanals die Tiefe der Ausnehmungen in einer Begrenzungswand sinkt und in der anderen steigt. Wenn die Tiefe auf einer Höhe des Schmelzekanals sich in den beiden Wänden jeweils um den gleichen Betrag, aber mit unterschiedlichem Vorzeichen ändert, ergeben sich erstaunlicherweise schlechtere Ergebnisse als bei Schmelzekanälen, bei denen die Beträge verschieden sind.

Nahe liegend erscheint zunächst, den Verlauf der Tiefe des Kanals in den beiden Begrenzungswänden als eine periodische Funktion zu gestalten, wobei eine Phasenverschiebung um 90° bei Winkelfunktionen dafür sorgt, dass in der einen Begrenzungswand ein Tiefenmaximum auf der Höhe auftritt, auf der bei der anderen Begrenzungswand ein Tiefenminimum zu verzeichnen ist. Der Verlauf der beiden Funktionen (der "Höhe des Schmelzekanals") wird des Weiteren im Verlauf des Kanals abklingen. Es hat sich als vorteilhaft erwiesen, in zumindest einem Bereich des zumindest einen Kanals von dieser allgemein vorteilhaften Regel abzuweichen und den Verlauf der Kanaltiefe in den beiden Begrenzungswänden zwei unterschiedlichen Funktionen zu unterwerfen.

Für diese Maßnahme empfehlen sich besonders die mittleren Bereiche eines Schmelzekanals. Für die Zwecke dieser Druckschrift kann der Verlauf eines Schmelzekanals in vier Bereiche eingeteilt werden: einen Anfangsbereich, einen ersten und einen zweiten mittleren Bereich und einen Endbereich.

Zu den oben genannten vorteilhaften Maßnahmen, die in Bezug auf den Verlauf von Wänden in einem Schmelzespalt beschrieben wurden, zählt eine unterschiedliche Länge der beiden Nuten, die eine auslaufende Schmelzeleitung in einem Schmelzespalt bilden. Die unterschiedliche Länge fällt natürlich oft damit zusammen, dass die betreffenden Ausnehmungen in der Schmelzetransportrichtung früher enden als die kürzeren Nuten oder Ausnehmungen.

Mittlerweile wird ein Großteil der hochwertigen Folienblasköpfe von Mehrschichtblasköpfen gestellt. Derartige Blasköpfe verfügen über mehrere Schmelzespalte, in denen jeweils eine Folienschicht gebildet wird. In Bezug auf solche Mehrschichtfolienblasköpfe hat es sich als vorteilhaft erwiesen, wenn die längeren der beiden Nuten, die die auslaufenden Schmelzeleitungen in einem ersten dieser mehreren Spalte bilden, auf der anderen Seite des Schmelzespaltes angeordnet sind, als die längeren der Nuten, die die auslaufenden Schmelzeleitungen in einem zweiten dieser mehreren Spalte bilden. Als besonders vorteilhaft hat sich herausgestellt, wenn die Begrenzungswand, die die spätere Außenwand des Folienverbundes in einem Folienspalt berührt, mit einer längeren Nut oder mit längeren Nuten versehen ist. Auf der anderen Seite der betreffenden Folienspalte, d. h. auf der gegenüberliegenden Begrenzungswand des betreffenden Folienspaltes, befinden sich demzufolge die kürzeren Nuten. In einem zylindrisch aufgebauten Mehrschichtfolienblaskopf dieser Art würden sich demzufolge an der äußeren Begrenzungswand des äußersten Folienspaltes und vorteilhafterweise an der inneren Begrenzungswand des innersten Folienspalte die längeren Nuten befinden.

Bei einem in der Stack-Die-Bauweise aufgebauten Blaskopf würden sich die längeren Nuten der betreffenden auslaufenden Schmelzekanäle in der oberen Begrenzungswand des obersten Schmelzespalts und/oder in der untersten Begrenzungswand des untersten Schmelzespalt befinden.

Weitere Ausführungsbeispiele der Erfindung gehen aus der gegenständlichen Beschreibung und den Ansprüchen hervor.

Die einzelnen Figuren zeigen:

Fig. 1      Eine schematische Funktionsskizze eines Folienblaskopfes 1
Fig. 2      Einen vergrößerten Ausschnitt aus Figur 1
Fig. 3      Eine Abwicklung eines Schmelzeverteilers
Fig. 4      Einen Schnitt A-B durch einen ersten Schmelzekanal
Fig. 5      Einen Schnitt A-B durch einen zweiten Schmelzekanal
Fig. 6      Einen Schnitt A-B durch einen dritten Schmelzekanal
Fig. 7      Einen Schnitt A-B durch einen vierten Schmelzekanal
Fig. 8      Einen Schnitt A-B durch einen fünften Schmelzekanal
Fig. 9      Eine Abwicklung eines Schmelzeverteilers
Fig. 10     Eine erste Ausnehmung in einer Begrenzungswand
Fig. 11     Eine zweite Ausnehmung in einer Begrenzungswand
Fig. 12     Eine dritte Ausnehmung in einer Begrenzungswand

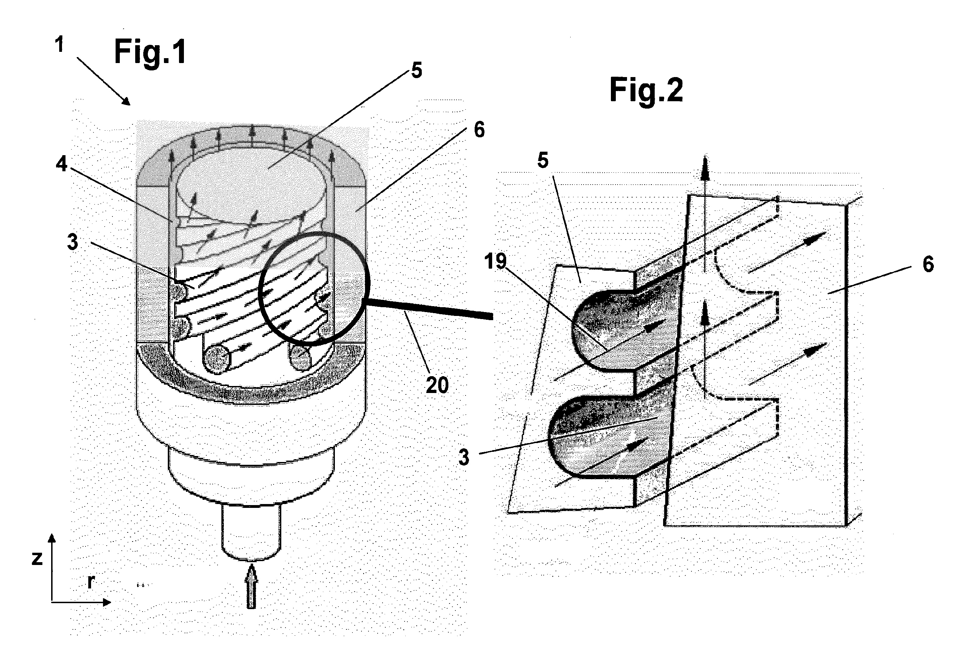

Fig. 1 zeigt ein Beispiel eines Einschichtblaskopfes 1, der über lediglich einen Schmelzespalt 4 verfügt, der eine kreiszylindrische Form besitzt. Der ebenfalls kreiszylinderförmige Blaskopf 1 und der Schmelzespalt 4 sind in diesem Fall zu der Hauptsymmetrieachse des Blaskopfes symmetrisch angeordnet. Der Schmelzespalt eines solchen Blaskopfes 1 wird von einem Innendorn 5 und einem Gehäuse 6 begrenzt. Um eine größere Abstraktion auf andere Blaskopftypen wie Stack-Die-Blasköpfen zu erreichen, sollte an dieser Stelle jedoch von innerer 5 und äußerer Begrenzungswand 6 gesprochen werden. Bei Stack-Die-Blasköpfen wäre in diesem Zusammenhang von oberen und unteren Begrenzungswänden die Rede.

Figur 2 zeigt noch einmal eine detaillierte Ansicht eines Schmelzekanals, der hier - wie oft im Stand der Technik gezeigt - lediglich durch eine Ausnehmung 3 oder Nut in der inneren Begrenzungswand 5 realisiert ist.

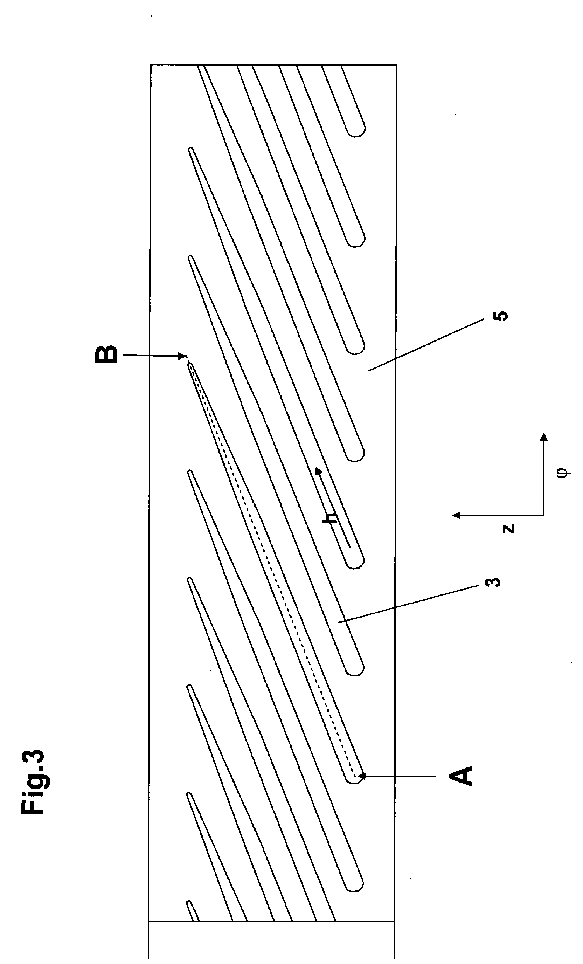

Figur 3 zeigt eine Abwicklung der Umfangsfläche des Dorns 5 und somit des Schmelzeverteilers des Blaskopfes 1. Interessant ist vor allem die Lage der Schnittlinie A-B und der als Nut zu erkennenden Ausnehmung 3.

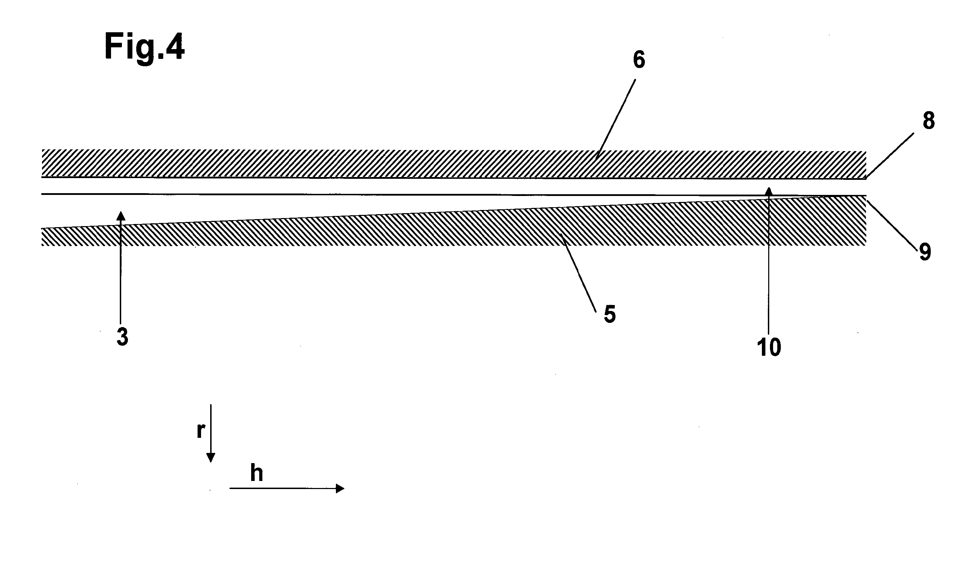

Figur 4 verdeutlicht nun, wie die Nut/Ausnehmung 3 des Blaskopfes 1 im Schnitt A-B verläuft. Die Tiefe T1 des Schmelzekanals 3, die von der inneren Begrenzungslinie 8 des Schmelzespalts 4 aus gemessen wird, nimmt stetig ab, bis der Kanal endgültig in den Spalt übergegangen ist.

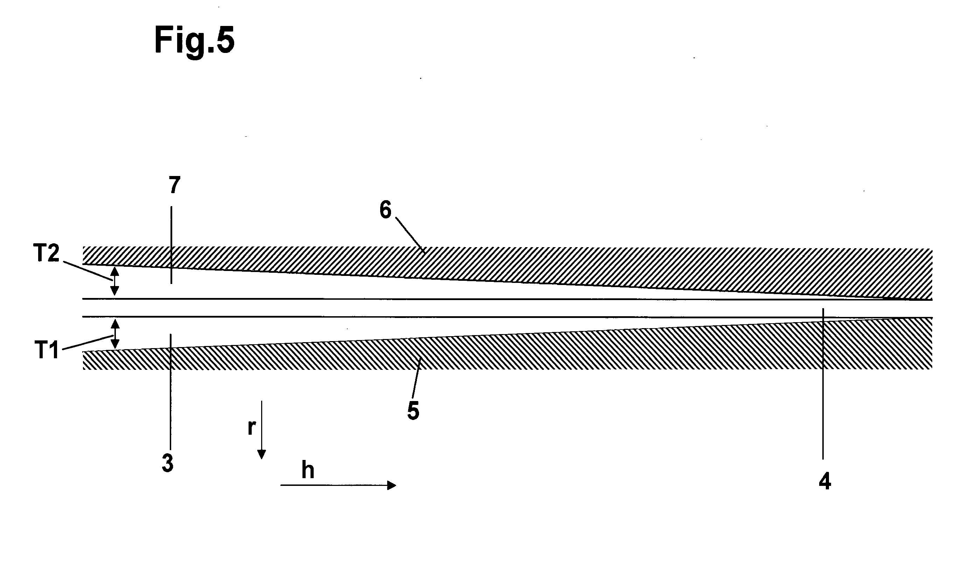

Figur 5 zeigt einen Schnitt A-B durch einen anderen Schmelzekanal 10, der sowohl von Ausnehmungen 3 in der inneren Begrenzungswand 5 als auch von Ausnehmungen 7 in der äußeren Begrenzungswand 6 gebildet wird. In der Zeichnung ist zu sehen, dass die Tiefen T1 und T2 in Richtung der Höhe des Schmelzekanals 10 "gleichartig" abnehmen. Als Funktion der Höhe h des Schmelzekanals 10 nehmen die beiden Tiefen T1 und T2 mit gleichem Vorzeichen und um gleiche Beträge ab. Mit der Höhe h des Schmelzekanals 10 wird eine Laufvariable bezeichnet, die die Länge des Schmelzekanals entlang der Richtung des Schmelzekanals wiedergibt. Sie ist also zum Beispiel zu den Zylinderkoordinaten z ungleich, da der Schmelzekanal 10 nicht ausschließlich in der axialen Richtung läuft.

In dem dargestellten Beispiel sinkt damit der Durchmesser D des Kanals gleichmäßig und stetig als Funktion der Höhe h ab.

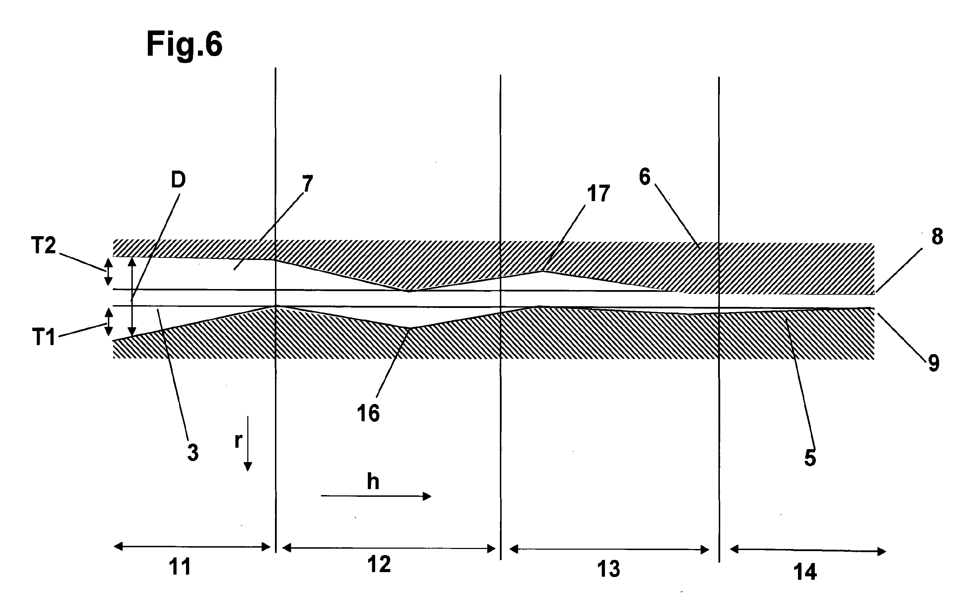

In Figur 6 ist ein Ausführungsbeispiel eines Schmelzekanals vorgestellt, das mehrere Aspekte der Erfindung verdeutlicht:

In dem Anfangsbereich 11 des Schmelzekanals 10 gibt es Ausnehmungen in beiden Begrenzungswänden 5 und 6. Der Verlauf der Tiefen T1 und T2 in den Begrenzungswänden ist jedoch sehr unterschiedlich. Er gehorcht einer anderen Funktion und der Verlauf ist auch nicht phasenverschoben. In dem ersten mittleren Bereich 12 ist genau dies der Fall:

Die Tiefe T1 hat auf der Höhe h des Schmelzekanals 10 ein Maximum, auf der die Tiefe T2 ein Minimum hat. Überhaupt gilt für T1 und T2 im ersten mittleren Bereich 12, dass ihre Steigungen T1' und T2' von gleichem Betrag und unterschiedlichem Vorzeichen sind. Ein solcher Verlauf als Funktion der Höhe h des Schmelzekanals 10 kommt zum Beispiel zustande, wenn man T1 und T2 als Funktion von phasenverschobenen Winkelfunktionen festlegt. So könnten die Tiefen der Ausnehmungen folgendermaßen festgelegt werden:

$$T1\,(h) = A\cos(h)e^{(-1/5\,h)}$$

$$T2 (h) = Acos(h+\Pi/2)e^{(-1/5\ h)}$$

mit A= konstant

Als Folge ergeben sich sehr abgerundete Verläufe der Tiefen der Ausnehmungen 3 und 7, die zwischen relativen Minima und Maxima 16 und 17 schwanken. Die betreffende Schmelzeleitung verjüngt sich als Funktion der Höhe h. Die Phasenverschiebung um $+\Pi/2$ bewirkt wie erwähnt, dass ihre Steigungen T1' und T2' von gleichem Betrag und unterschiedlichem Vorzeichen sind. Ein solcher Verlauf der Tiefe ist, wie erwähnt, insbesondere in zumindest einem mittleren Bereich 12 und 13 des Schmelzekanals 10 von Vorteil.

Für die Zwecke dieser Anmeldung kann man sagen, dass die beiden oben dargestellten Funktionen "denselben Verlauf" haben, aber - wie erwähnt - phasenverschoben sind.

Besonders überraschend ist, dass ein bewusstes Abweichen von der oben aufgestellten Regel in zumindest einem Bereich des Schmelzekanals Vorteile bringt.

In dem Endbereich des in Figur 6 gezeigten Schmelzekanals 10 sind lediglich Ausnehmungen in der inneren Begrenzungswand 6 zu sehen.

In dem Endbereich 14 unterliegt der Verlauf der Funktion T1 (h) damit einem deutlich anderen Verlauf als der Verlauf der Funktion T2(h), der sich weiterhin periodisch fortsetzt.

Ein ähnlicher, etwas abgerundeter Bereich kann durch folgende Funktionen erreicht werden:

$$T1(h) = 0$$

$$T2(h) = Acos(h+\Pi/2)e^{(-1/5\ h)}$$

In den mittleren Bereichen 12 und 13 wäre

$$T1(h) = k$$

mit k = konstant und k>0 vorteilhafter.

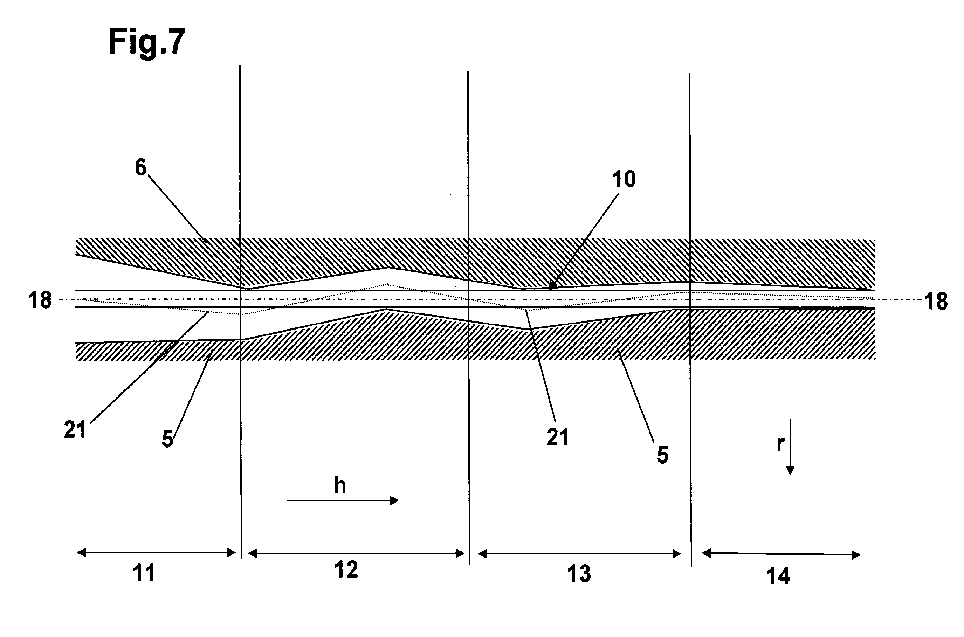

Der mathematisch gebildete Fachmann erkennt im Verlauf der Tiefe T1(h) und T2 (h) der Ausnehmungen 3 und 7 in den Figuren 6 und 7 mehrere relative Extrema, bei denen die erste Ableitung der Tiefe T1 (h) und T2(h) nach der Laufvariable h gleich Null ist. Zu diesen relativen Extrema gehören die relativen Maxima 16 und 17 in Figur 6. Es hat sich gezeigt, dass es vorteilhaft ist, weniger als vier relative Extrema pro Begrenzungswand vorzusehen.

Auch zwei oder drei Extrema haben in bestimmten Anwendungsfällen ihre Vorteile.

Figur 7 zeigt ein Ausführungsbeispiel des Verlaufs eines Schmelzekanals 10, das dem in Figur 6 abgebildeten Schmelzekanal sehr ähnelt. Bei Figur 7 ist der Verlauf der Mittellinie 21 des Schmelzekanals 10 und der Mittellinie 18 des Schmelzespalts 4 zu beachten.

Die Mittellinie 18 gibt bei der in Figur 7 gewählten Perspektive die Mitte der Erstreckung des Schmelzespalts in r-Richtung wieder.

Die Mittellinie 21 gibt bei der in Figur 7 gewählten Perspektive die Mitte der Erstreckung des Schmelzekanals 10 in r-Richtung wieder. Bei Stack-Die-Blasköpfen, die auf flachen Lochscheiben bestehen, würde man an dieser Stelle die Erstreckung von Schmelzekanälen und -spalten in der axialen Richtung z des Blaskopfes zugrunde legen.

In dem Endbereich 14 des in Figur 7 abgebildeten Schmelzekanals 10 kommt es zu keiner Kreuzung der beiden Mittellinien 18 und 21. Bei Stack-Die-Blasköpfen, die aus flachen Lochscheiben bestehen, würde man an dieser Stelle die Erstreckung in der axialen Richtung des Blaskopfes zugrunde legen.

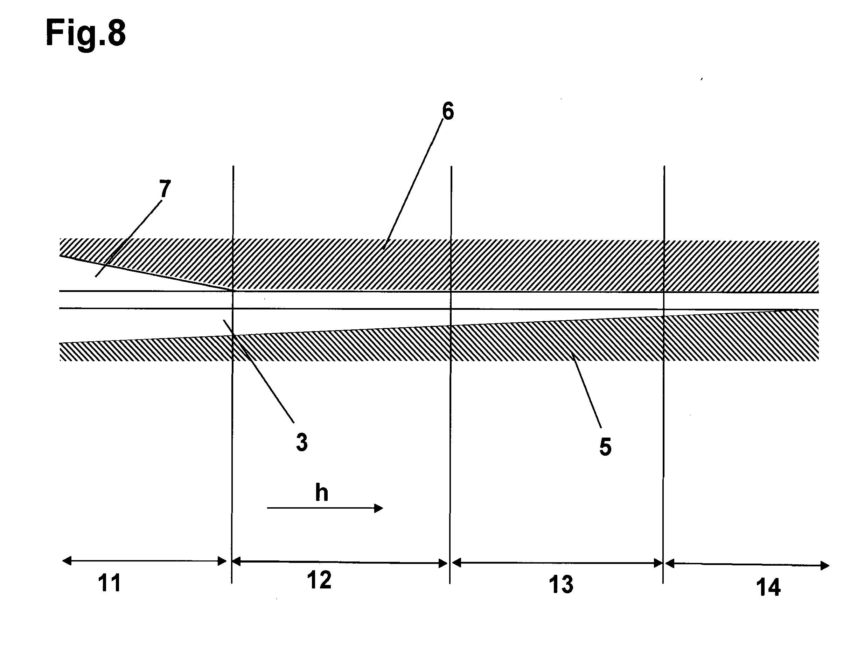

Figur 8 zeigt ein Ausführungsbeispiel eines Schmelzekanals, der nur im Anfangsbereich 11 durch Ausnehmungen 3, 7 in beiden Begrenzungswänden 5, 6 gebildet ist.

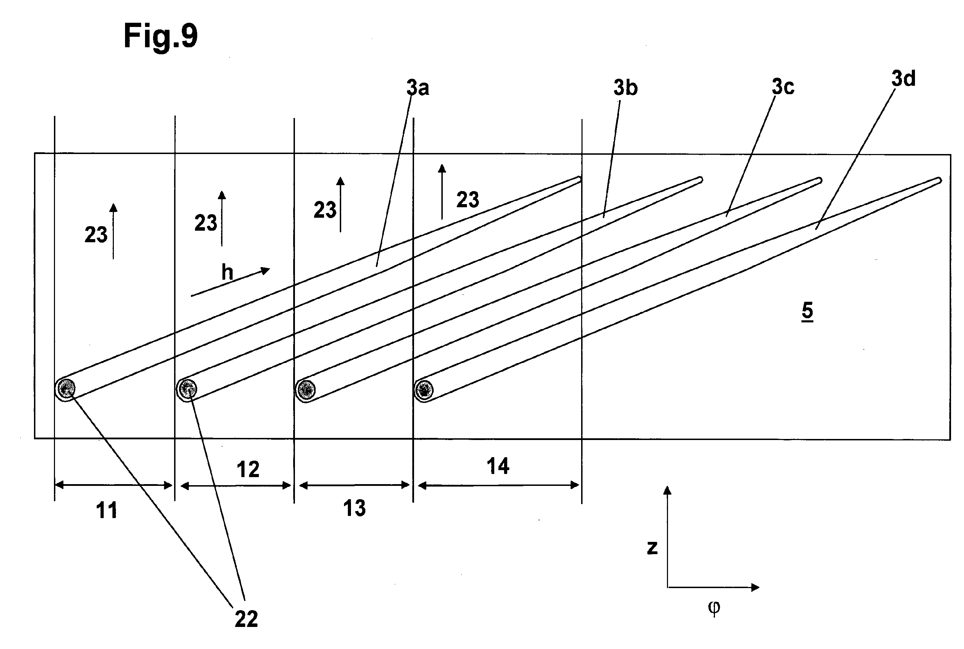

Figur 9 zeigt noch einmal eine Abwicklung der Umfangsfläche eines Innendorns 5, die gleichzeitig die innere Begrenzungswand eines Schmelzespalts 4 darstellt. Jedoch sind in Figur 9 im Gegensatz zu Figur 3 lediglich vier Ausnehmungen 3a bis d in der Begrenzungswand 5 dargestellt, um besser auf Einzelheiten eingehen zu können.

Die nicht dargestellte Schmelze dringt aus den Schmelzeleitungen 22 in den Bereich der Schmelzekanäle 10, die unter anderem von den vorgenannten Ausnehmungen 3a bis d gebildet werden. Die Schmelze wird dann zunächst größtenteils durch die Schmelzekanäle 10 in Richtung der Laufvariablen h - also in Richtung der Achsen der Schmelzekanäle 10 - geleitet. Jedoch strömt ständig ein gewisser Anteil an Schmelze in den Schmelzespalt 4. Hier ändert die unter erheblichem Druck stehende Schmelze ihre Bewegungsrichtung und strebt weitgehend in der axialen Richtung z des Folienblaskopfes 1 dem Extrusionsspalt zu. Dieser Umstand wird durch die Pfeile 23 symbolisiert.

In Figur 9 sind die Bereiche 11 bis 14 auf die von der in Umfangsrichtung φ ersten Ausnehmung 3a bezogen. Im Anfangsbereich 11 der Ausnehmung 3a, der in Umfangsrichtung φ bis zum Beginn der nächsten Ausnehmung 3b reicht, ist die Ausnehmung 3a in der axialen Richtung z die erste Ausnehmung. Es ist daher leicht einzusehen, dass die Ausnehmung 3a in diesem Bereich nicht von Schmelze, die aus einer anderen Ausnehmung stammen müsste, überströmt wird. Der Anfangsbereich 11 kann daher in diesem Zusammenhang auch nullter Überströmungsbereich genannt werden.

In dem ersten mittleren Bereich 12 wird die Ausnehmung 3a bereits von Schmelze überströmt, die aus der Ausnehmung 3b stammt und von dieser aus in den Schmelzespalt eingedrungen ist. Der erste mittlere Bereich 12 kann daher auch erster Überströmungsbereich genannt werden.

Dementsprechend kann der zweite mittlere Bereich 13 zweiter Überströmbereich und der Endbereich 14 dritter Überströmbereich genannt werden. Die in dieser Druckschrift für den Anfangsbereich 11, den ersten mittleren Bereich 12, den zweiten mittleren Bereich 13 und den Endbereich 14 vorgeschlagenen Maßnahmen sind besonders vorteilhaft, wenn sie sich auf die genannten unterschiedlichen Überströmbereiche beziehen. In der Regel werden die Ausnehmungen solcher Blasköpfe eine noch größere Zahl unterschiedlicher Überströmbereiche aufweisen. Dementsprechend kann man zu der Länge von Bereichen 11 bis 14 im Sinne dieser Druckschrift sagen, dass sie etwa zwischen einem Viertel und einem Zehntel der Länge des jeweiligen Schmelzekanals liegen.

Vor dem Hintergrund der in Bezug auf Figur 9 gemachten Aussagen lassen sich eine Ausführungsform der Erfindung darstellen:

Wie bereits an anderer Stelle erwähnt, ist zumindest ein Schmelzekanal in seinem Anfangsbereich von Ausnehmungen 3, 7 in seinen beiden Begrenzungswänden 5, 6 gebildet . Wie ebenfalls erwähnt ist zumindest einer der in Richtung h des Kanals 10 folgenden Bereiche durch Ausnehmungen 3, 7 in nur einer Wand gebildet. Dies erscheint im Endbereich 14 d.h. letzter Überströmbereich.

Wenn die Ausnehmungen 3, 7 im ersten nullten Überströmbereich 11 gemeinsam den Schmelzekanal 10 bilden, dann bringt es zusätzliche Vorteile, wenn die Ausnehmung, die zuerst endet, nicht direkt nach dem Durchlaufen des nullten Überströmbereichs endet, sondern erst danach. Vorteilhaft ist es, wenn die Ausnehmung 7 in der äußeren Begrenzungswand zuerst endet.

Eine Ausnahme von dieser Regel bilden die äußersten Spalte eines Blaskopfes mit kreiszylinderförmigen Schmelzespalten und die obersten Spalte eines Stack-Die-Blaskopfes: Hier sollten die Ausnehmungen 7 in der äußersten Begrenzungswand 6 oder der obersten Begrenzungswand länger laufen als die Ausnehmungen 3 in der jeweils anderen Wand 5.

Was die Weglänge der kürzeren Ausnehmungen nach dem Ende des ersten Überströmbereichs 11 anbelangt, so hat sich gezeigt, dass sie durchaus im Bereich der Länge eines Bereiches 11, 12, 13, 14 liegen können. Diese zusätzliche Länge der betreffenden kürzeren Ausnehmung 3, 7 über den ersten Überströmbereich 11 hinaus kann damit bei 10 bis 30 %, vorteilhafter aber bei 15 bis 25 % der Gesamtlänge des jeweiligen Schmelzekanals 10 liegen.

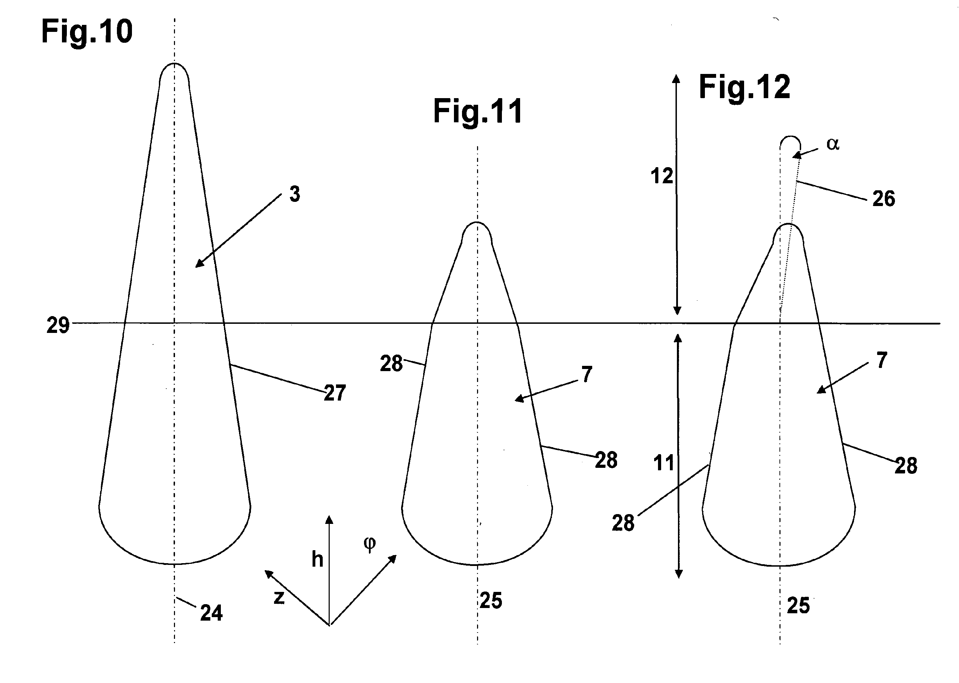

Die folgenden Figuren 10 bis 12 befassen sich mit der Ausgestaltung der Ausnehmungen 3, 7, die in die beiden unterschiedlichen Begrenzungswände 5, 6 eingebracht sind und die gemeinsam einen Schmelzekanal 10 bilden. Aus darstellerischen Gründen wurde die Breite der Ausnehmungen in den drei

Figuren gegenüber der Länge (die sich in "h-Richtung" erstreckt) übertrieben dargestellt.

In Figur 10 ist die Ausnehmung 3 dargestellt. Sie besitzt einen Rand 27, der zu beiden Seiten der Ausnehmung liegt. Ausnehmungen 3, 7 der in den Figuren dargestellten Art werden in der Regel mit Fräswerkzeugen in die Begrenzungswände 5, 6 der Schmelzespalte eingebracht. Die in Figur 10 dargestellte Ausnehmung verjüngt sich kontinuierlich von ihrem Anfang bis zu ihrem Ende. Aus dem in der vorliegenden Druckschrift Ausgesagten ist zu entnehmen, dass ein Verjüngen der Ausnehmungen - von gewissen periodischen und a-periodischen Schwankungen abgesehen - wünschenswert ist, da die Schmelze sukzessive von dem Schmelzekanal 10 an den Schmelzespalt 4 abgegeben werden soll. Die Ausnehmung 3 ist leicht als eine Fräsnut, bei der das Fräswerkzeug beim Fräsprozess in der Richtung der Erstreckung der Nut bewegt und hierbei kontinuierlich aus der betreffenden Begrenzungswand 5 herausgezogen wird, herstellbar.

In Figur 11 ist eine Ausnehmung 7 in einer Begrenzungswand 6 dargestellt. Die Ausnehmung 7 ist in diesem Ausführungsbeispiel kürzer als die Ausnehmung 3 in Figur 10 (die Bezugszeichen 3 und 7 sowie 5 und 6 könnten für die Zwecke der Figuren 10 bis 12 auch vertauscht sein). Der Grund für die Verkürzung ist eine erhebliche Zunahme der Geschwindigkeit, mit der sich die Ausnehmung 7 verjüngt, nachdem sie die Linie 29, die die Bereiche 11 und 12 trennt, in "h-Richtung" "passiert" hat.

Die Ausnehmung 7 aus Figur 11 kann also hergestellt werden, indem das Fräswerkzeug zunächst genauso den Anfangsbereich der Ausnehmung 7 herstellt, wie das bei der Ausnehmung 3 aus Figur 10 geschehen ist. Nach dem Passieren der Linie 29 wird das Fräswerkzeug 29 jedoch schneller aus der Begrenzungswand 6 herausgezogen als bei der Ausnehmung 3 in Figur 10. Wenn die beiden Ausnehmungen 3 aus Figur 10 und 7 aus Figur 11 gemeinsam einen Begrenzungskanal bilden, und die Symmetrieachsen 24 und 25 der beiden Ausnehmungen miteinander fluchten, würde der betreffende Begrenzungskanal 10 in seinem Anfangsbereich 11 von zwei symmetrischen Ausnehmungen gebildet. In dem ersten mittleren Bereich 12, der nach der Linie 29 folgt, und in dem sich die Ausnehmung 7 stärker verjüngt als die Ausnehmung 3 (für die Zwecke dieser Druckschrift "Verjüngungsbereich"), würden die beiden Ausnehmungen 3 und 7 weiterhin übereinander liegen. Jedoch würden beide Ränder 28 der Ausnehmung 7 (in "r-Richtung") über der Ausnehmung 3 liegen. Es hat sich gezeigt, dass eine solche Anordnung Probleme mit sich bringt und dass es vorteilhaft ist, wenn zumindest eine der beiden Begrenzungswände 28 der Ausnehmung 7 nicht in r-Richtung über der Ausnehmung 3 liegt. Dieses ist zum Beispiel möglich, wenn die in Figur 12 dargestellte Ausnehmung 7 gemeinsam mit der Ausnehmung 3 aus Figur 10 einen Schmelzekanal bildet. Werden diese beiden Ausnehmungen so zueinander angeordnet, dass ihre Symmetrielinien 24 und 25 in r-Richtung miteinander fluchten, dann liegen die beiden rechten äußeren Begrenzungslinien 27 und 28 übereinander. Lediglich die in Umfangsrichtung φ linke Begrenzungslinie 28 liegt nach der Linie 29 bis zu ihrem 28 Ende - also in dem Verjüngungsbereich - über der Ausnehmung 3. Eine solche Art der Anordnung der Ausnehmungen 3, 7, bei der zumindest zwei der Ränder 27 und 28 aufeinander liegen (hier im Anfangsbereich 11) und in dem Bereich, in dem sich eine Ausnehmung stärker verjüngt (Verjüngungsbereich), übereinander liegen, hat sich in Tests als vorteilhaft erwiesen.

Bei der Ausnehmung 7 aus Figur 12 kommen zwei Symmetrielinien 25 und 26 vor, die den Winkel $\propto$ einschließen. Die Symmetrielinien 24, 25 und 26 geben auch den Weg an, den die Hauptsymmetrieachse des Fräswerkzeuges bei der Herstellung der Ausnehmungen 3 und 7 überstreicht.

In den Figuren 1 bis 12 wurden Einzelheiten von Folienblasköpfen 1 mit kreiszylinderförmigen Schmelzespalten 4 erläutert. Bei diesem Blaskopftyp zeitigt die Anwendung der vorliegenden Erfindung besondere Vorteile. Jedoch ist auch die Ausstattung von Stack-Die-Blasköpfen mit den gezeigten Merkmalen vorteilhaft. Viele der vorstehend gemachten Aussagen sind direkt auf Stack-Die-Blasköpfe übertragbar. Oft ist es nur nötig, in den Figuren die z- und die r-Koordinaten zu vertauschen, um die Aussagen von den Folienblasköpfen 1 mit kreiszylinderförmigen Schmelzespalten 4 auf die Stack-Die-Blasköpfe zu übertragen.

Längere Ausnehmungen oder Nuten 3 befinden sich vorteilhafterweise in den Begrenzungswänden der Folienspalte von Folienblasköpfen, die später die Außenhaut eines Mehrschichtfolienverbundes bilden.

| Bezugszeichenliste | |
|---|---|
| 1 | |
| 2 | |
| 3 | Ausnehmung/Nut in der inneren Begrenzungswand |
| 4 | Schmelzespalt |
| 5 | Innendorn, innere Begrenzungswand des Schmelzespaltes |
| 6 | Gehäuse, äußere Begrenzungswand des Schmelzespaltes |
| 7 | Ausnehmung/Nut in der äußeren Begrenzungswand |
| 8 | Innere Begrenzungslinie des |
| 9 | Äußere Begrenzungslinie des |
| 10 | Schmelzekanal |
| 11 | Anfangsbereich |
| 12 | Erster mittlerer Bereich |
| 13 | Zweiter mittlerer Bereich |
| 14 | Endbereich |
| 15 | |
| 16 | Relatives Maximum T1 |
| 17 | Relatives Maximum T2 |
| 18 | Mittellinie des Schmelzespalts 4 |
| 19 | Pfeile (Strömungsrichtung der Schmelze) |
| 20 | Lupe (Ausschnitt Figur 2) |

(fortgesetzt)

| Bezugszeichenliste | |
|---|---|
| 21 | Mittellinie des Schmelzekanals 10 |
| 22 | Schmelzeleitung |
| 23 | Pfeil Schmelzetransport |
| 24 | Symmetrieachse der Ausnehmung 3 |
| 25 | Symmetrieachse der Ausnehmung 7 |
| 26 | Symmetrieachse der Ausnehmung 7 nach Richtungsänderung |
| 27 | Rand der Ausnehmung 3 |
| 28 | Rand der Ausnehmung 7 |
| 29 | Linie zwischen Bereichen 11 und 12 |
| z | Axiale Zylinderkoordinaten |
| r | Radiale Zylinderkoordinaten |
| $\varphi$ | Zylinderkoordinaten in Umfangsrichtung |
| h | Laufvariable (Koordinate) in der Raumrichtung entlang des Verlaufs des Schmelzekanals / "Höhe" |
| T1 | Tiefe der Ausnehmung in der inneren Wand in Richtung der radialen Zylinderkoordinaten, von der Begrenzungslinie 8 des Schmelzespaltes gemessen |
| T2 | Tiefe der Ausnehmung in der äußeren Wand in Richtung der radialen Zylinderkoordinaten, von der Begrenzungslinie 9 des gemessen |
| $\alpha$ | Winkel zwischen den Symmetrielinien 25 und 26 |
| 3a | Erste Ausnehmung/Nut in der inneren Begrenzungswand |
| 3b | Zweite Ausnehmung/Nut in der inneren Begrenzungswand |
| 3c | Dritte Ausnehmung/Nut in der inneren Begrenzungswand |
| 3d | Vierte Ausnehmung/Nut in der inneren Begrenzungswand |

**Patentansprüche**

1. Folienblaskopf (1) zur Herstellung eines Folienschlauchs aus ein- oder mehrschichtiger Folie,

- welcher (1) zumindest einen Schmelzespalt (4) zur Bildung einer Folienschicht enthält, welcher (4) zwischen zwei Begrenzungswänden (5, 6) ausgeprägt ist,
- wobei zumindest eine Schmelzeleitung (22) in den Schmelzespalt (4) einmündet,
- die sich innerhalb des Schmelzespaltes (4) in einen ersten Schmelzekanal (10) wandelt,
- der zumindest in einem Teilbereich (11, 12, 13, 14) des Verlaufs des zumindest einen ersten Schmelzekanals (10) von Ausnehmungen (3, 7) in den beiden Begrenzungswänden (5, 6) des Schmelzespaltes (4) gebildet wird
- und der die Schmelze in dem Schmelzespalt (4) verteilt, während er (10) sich in seinem Verlauf in der Transportrichtung der Schmelze (h) verjüngt und schließlich in seinem (10) Endbereich (14) ganz in den Schmelzespalt (4) übergeht,
- wobei der zumindest eine erste Schmelzekanal (10) in einem seiner Teilbereiche (11, 12, 13, 14) lediglich von Ausnehmungen (3, 7) in einer seiner beiden Begrenzungswände (5, 6) gebildet wird,
wobei der zumindest eine erste Schmelzekanal (10) einen nullten Überströmbereich (11), der nicht von Schmelze überströmt wird, und einen Überströmbereich (12, 13, 14), der von der Schmelze zumindest eines zweiten Schmelzespalts überströmt wird, aufweist, wobei der zumindest eine erste Schmelzekanal (10) in dem gesamten nullten Überströmbereich (11) von Ausnehmungen (3, 7) in beiden Begrenzungswänden (5, 6) des Schmelzespalts (4) gebildet wird
**dadurch gekennzeichnet,**
- **dass** der Teilbereich des ersten Schmelzekanals (10), der lediglich Ausnehmungen (3, 7) in einer seiner beiden Begrenzungswände (5, 6) gebildet wird, mindestens der letzte Überströmbereich ist.

2. Folienblaskopf (1) nach Anspruch 1,
**dadurch gekennzeichnet, dass**
die Tiefe (T1, T2) der Ausnehmungen (3, 7) in zumindest einer der beiden Begrenzungswände (5, 6) in zumindest einem Teilbereich (11, 12, 13, 14) des zumindest einen ersten Schmelzekanals (10) in der Transportrichtung der Schmelze dieses Schmelzekanals (10) zunimmt.

3. Folienblaskopf (1) nach einem der vorstehenden Ansprüche,
**dadurch gekennzeichnet, dass**
der Betrag der Änderung der Tiefe (T1, T2) der Ausnehmungen (3, 7) in den beiden Begrenzungswänden (5, 6) auf einer Höhe (h) des zumindest einen ersten Schmelzekanals (10) in zumindest einem Teilbereich (11, 12, 13, 14) des Schmelzekanals (10), der nicht der Endbereich (14) ist, in der Transportrichtung der Schmelze (h) in dem Schmelzekanal (10) unterschiedlich ist.

4. Folienblaskopf (1) nach dem der vorstehenden Anspruch,
**dadurch gekennzeichnet, dass**
die Änderung der Tiefe (T1, T2) der Ausnehmungen (3, 7) in einer der beiden Begrenzungswände (5, 6) in zumindest einem Abschnitt (11, 12, 13, 14) des zumindest einen ersten Schmelzekanals (10), der nicht der Endabschnitt (14) ist, in der Transportrichtung (h) der Schmelze in dem Schmelzekanal (10) einer anderen Funktion unterliegt als die Änderung der Tiefe (T1, T2) der Ausnehmungen (3, 7) in der jeweils anderen der beiden Begrenzungswände (5, 6).

5. Folienblaskopf (1) nach einem der vorstehenden Ansprüche,
**dadurch gekennzeichnet, dass**
die Tiefe (T1, T2) der Ausnehmungen (3, 7) in zumindest einer der beiden Begrenzungswände (5, 6) weniger als vier relative Extrema (16, 17) aufweist.

6. Folienblaskopf (1) nach einem der vorstehenden Ansprüche,
**dadurch gekennzeichnet, dass**

- die Mittellinie (21) des zumindest einen ersten Schmelzekanals (10), welche die Mitte der Erstreckung des zumindest einen Schmelzekanals in Richtung seiner Erstreckung quer zu der Transportrichtung (23) der Schmelze in dem zumindest einen Schmelzespalt (4) und quer zu der Transportrichtung der Schmelze in dem zumindest einen Schmelzekanal (10) angibt,
- in zumindest einem Teilbereich (11, 12, 13, 14) des Verlaufs des Schmelzekanals zwischen einem Maximum (16, 17) der Tiefe (T1, T2) der Ausnehmungen in einer ersten Begrenzungswand (5, 6) und zwischen einem Maximum (16, 17) der Tiefe der Ausnehmungen in der verbleibenden zweiten Begrenzungswand (5, 6) die Mittellinie (18) des zumindest einen Schmelzespaltes (4),
- welche (18) die Mitte der Erstreckung des Schmelzespaltes (4) in Richtung seiner Erstreckung quer zu der Transportrichtung (h) der Schmelze in dem zumindest einen Schmelzekanal (10) und quer zu der Transportrichtung (23) der Schmelze in dem Schmelzespalt (4) angibt,
nicht kreuzt.

7. Folienblaskopf (1) nach einem der vorstehenden Ansprüche,
**dadurch gekennzeichnet, dass**
der zumindest eine erste Schmelzekanal (10) auch in dem Anfangsbereich (12) des Überströmbereichs, der sich direkt an den nullten Überströmbereich (11) anschließt, von Ausnehmungen (3, 7) in beiden Begrenzungswänden (5, 6) des Schmelzespalts (4) gebildet wird.

8. Folienblaskopf (1) nach dem vorstehenden Anspruch,
**dadurch gekennzeichnet,**

- **dass** der zumindest eine erste Schmelzekanal (10) auch in dem Anfangsbereich (12) des Überströmbereichs (12, 13, 14), der (12) sich direkt an den nullten Überströmbereich (11) anschließt, von Ausnehmungen (3, 7) in beiden Begrenzungswänden (5, 6) des Schmelzespalts (4) gebildet wird,
- und **dass** dieser Anfangsbereich (12) eine Länge aufweist, die bei 10 bis 30 %, vorzugsweise aber bei 15 bis 25 % der Gesamtlänge des zumindest einen ersten Schmelzekanals (10) liegt.

**9.** Folienblaskopf (1) nach einem der vorstehenden Ansprüche,
**dadurch gekennzeichnet,**

- **dass** der zumindest eine erste Schmelzekanal (10) zumindest in einem seiner Teilbereiche (11, 12, 13, 14) von Ausnehmungen (3, 7) in beiden Begrenzungswänden (5, 6) des Schmelzespalts (4) gebildet wird,
- **dass** dieser Teilbereich (11, 12, 13, 14) dann in einen Teilbereich (11, 12, 13, 14) übergeht, in dem sich eine der beiden Ausnehmungen (3, 7) stärker verjüngt als die jeweils andere (3, 7)
- und **dass** in diesem Verjüngungsbereich eine Begrenzungswand (26, 27) der einen Ausnehmung (3, 7) und eine Begrenzungswand (26, 27) der anderen Ausnehmung (3, 7) miteinander fluchten.

**10.** Folienblaskopf (1) nach einem der vorstehenden Ansprüche,
**gekennzeichnet durch**
zumindest zwei Schmelzespalte mit jeweils zwei Begrenzungswänden, welche mit Ausnehmungen (3, 7) ausgestattet sind, die in der jeweils ersten Begrenzungswand eine größere Länge haben als in der zweiten Begrenzungswand.

**11.** Folienblaskopf (1) nach dem vorstehenden Anspruch,
**dadurch gekennzeichnet, dass**
die erste Begrenzungswand (26, 27) des ersten Schmelzespalts die umgekehrte Ausrichtung zu dem ersten Schmelzespalt aufweist wie die erste Begrenzungswand (26, 27) des zweiten Schmelzespalts zu dem zweiten Schmelzespalt.

**12.** Folienblaskopf (1) nach dem vorstehenden Anspruch,
**dadurch gekennzeichnet,**

- **dass** der erste und der zweite Schmelzespalt derart zueinander ausgerichtet sind,
- **dass** sich die erste Begrenzungswand (26, 27) des ersten Schmelzespalts mit der ersten Oberfläche des Folienverbundes reibt,
- und **dass** die erste Begrenzungswand (26, 27) des zweiten Schmelzespalts die zweite Oberfläche des Folienverbundes berührt.

**Claims**

**1.** Film blowing die (1) for producing a tubular film made of single-layer or multi-layer film,

- which (1) comprises at least one melt gap (4) for forming a film layer, which (4) is embodied between two boundary walls (5, 6),
- wherein at least one melt line (22) issues into the melt gap (4)
- and converts within the melt gap (4) into a first melt channel (10),
- which is formed at least in a partial region (11, 12, 13, 14) of the progression of the at least one first melt channel (10) by recesses (3, 7) in the two boundary walls (5, 6) of the melt gap (4),
- and which distributes the melt in the melt gap (4), while it (10) tapers in its progression in the direction of transport of the melt (h) and finally merges entirely into the melt gap (4) in its (10) end region (14),
- wherein the at least one first melt channel (10) is formed in one of its partial regions (11, 12, 13, 14) only by recesses (3, 7) in one of its two boundary walls (5, 6),
wherein the at least one first melt channel (10) has an overflow region (11) which is set to zero and over which melt does not flow, and an overflow region (12, 13, 14) over which the melt at least of a second melt gap flows, wherein the at least one first melt channel (10) is formed in the entire overflow region (11) set to zero by recesses (3, 7) in both boundary walls (5, 6) of the melt gap (4),
**characterized**
- **in that** the partial region of the first melt channel (10) which is formed only by recesses (3, 7) in one of its two boundary walls (5, 6) is at least the last overflow region.

**2.** Film blowing die (1) according to Claim 1,
characterized that
the depth (T1, T2) of the recesses (3, 7) increases in at least one of the two boundary walls (5, 6) in at least one partial region (11, 12, 13, 14) of the at least one first melt channel (10) in the direction of transport of the melt of this melt channel (10).

3. Film blowing die (1) according to either of the preceding claims,
**characterized in that**
the magnitude of the change in depth (T1, T2) of the recesses (3, 7) in the two boundary walls (5, 6) is different at a height (h) of the at least one first melt channel (10) in at least one partial region (11, 12, 13, 14) of the melt channel (10), which is not the end region (14), in the direction of transport of the melt (h) in the melt channel (10).

4. Film blowing die (1) according to the preceding claim,
**characterized in that**
the change in depth (T1, T2) of the recesses (3, 7) in one of the two boundary walls (5, 6), in at least one portion (11, 12, 13, 14) of the at least one first melt channel (10), which is not the end portion (14), is subject to a different function in the direction of transport (h) of the melt in the melt channel (10) than the change in depth (T1, T2) of the recesses (3, 7) in the respective other of the two boundary walls (5, 6).

5. Film blowing die (1) according to one of the preceding claims,
**characterized in that**
the depth (T1, T2) of the recesses (3, 7) in at least one of the two boundary walls (5, 6) has less than four relative extremes (16, 17).

6. Film blowing die (1) according to one of the preceding claims,
**characterized in that**

- the centre line (21) of the at least one first melt channel (10), which denotes the centre of the extent of the at least one melt channel in the direction of the extent thereof transversely to the direction of transport (23) of the melt in the at least one melt gap (4) and transversely to the direction of transport of the melt in the at least one melt channel (10),
- in at least one partial region (11, 12, 13, 14) of the progression of the melt channel between a maximum (16, 17) of the depth (T1, T2) of the recesses in a first boundary wall (5, 6) and between a maximum (16, 17) of the depth of the recesses in the retaining second boundary wall (5, 6), does not intersect the centre line (18) of the at least one melt gap (4),
- which (18) denotes the centre of the extent of the melt gap (4) in the direction of the extent thereof transversely to the direction of transport (h) of the melt in the at least one melt channel (10) and transversely to the direction of transport (23) of the melt in the melt gap (4).

7. Film blowing die (1) according to one of the preceding claims,
**characterised in that**
the at least one first melt channel (10) is also formed by recesses (3, 7) in both boundary walls (5, 6) of the melt gap (4) in the starting region (12) of the overflow region which directly adjoins the overflow region (11) set to zero.

8. Film blowing die (1) according to the preceding claim,
**characterized**

- **in that** the at least one first melt channel (10) is also formed by recesses (3, 7) in both boundary walls (5, 6) of the melt gap (4) in the starting region (12) of the overflow region (12, 13, 14) which (12) directly adjoins the overflow region (11) set to zero,
- and **in that** this starting region (12) has a length which amounts to 10 to 30%, but preferably 15 to 25%, of the total length of the at least one first melt channel (10).

9. Film blowing die (1) according to one of the preceding claims,
**characterized**

- **in that** the at least one first melt channel (10) is formed at least in one of its partial regions (11, 12, 13, 14) by recesses (3, 7) in both boundary walls (5, 6) of the melt gap (4),
- **in that** this partial region (11, 12, 13, 14) then merges into a partial region (11, 12, 13, 14) in which one of the two recesses (3, 7) tapers to a greater extent than the respective other recess (3, 7),
- and **in that**, in this tapering region, a boundary wall (26, 27) of one recess (3, 7) and a boundary wall (26, 27) of the other recess (3, 7) are aligned with one another.

10. Film blowing die (1) according to one of the preceding claims,
**characterized by**
at least two melt gaps each with two boundary walls equipped with recesses (3, 7) which have a greater length in the respective first boundary wall than in the second boundary wall.

11. Film blowing die (1) according to the preceding claim,
**characterized in that**
the first boundary wall (26, 27) of the first melt gap has an alignment with the first metal gap which is inverse with respect to that which the first boundary wall (26, 27) of the second melt gap has with the second melt gap.

12. Film blowing die (1) according to the preceding claim,
**characterised**

- **in that** the first and the second melt gaps are oriented with respect to one another in such a manner
- that the first boundary wall (26, 27) of the first melt gap makes rubbing contact with the first surface of the film composite,
- and that the first boundary wall (26, 27) of the second melt gap touches the second surface of the film composite.

**Revendications**

1. Tête de soufflage de film (1) pour la fabrication d'un tube de film en un film à une ou plusieurs couches,

- qui contient (1) au moins une fente de masse fondue (4) pour la formation d'une couche de film, qui (4) est créée entre deux parois de limitation (5, 6),
- dans laquelle au moins une conduite de masse fondue (22) débouche dans la fente de masse fondue (4),
- qui se transforme à l'intérieur de la fente de masse fondue (4) en un premier canal de masse fondue (10),
- qui est formé, au moins dans une région partielle (11, 12, 13, 14) du tracé dudit au moins un premier canal de masse fondue (10), par des évidements (3, 7) dans les deux parois de limitation (5, 6) de la fente de masse fondue (4)
- et qui répartit la masse fondue dans la fente de masse fondue (4), tandis qu'il (10) se rétrécit sur son tracé dans la direction de transport de la masse fondue (h) et se prolonge finalement dans sa (10) région d'extrémité (14) entièrement par la fente de masse fondue (4),
- dans laquelle ledit au moins un premier canal de masse fondue (10) est formé dans une de ses régions partielles (11, 12, 13, 14) uniquement par des évidements (3, 7) dans une de ses deux parois de limitation (5, 6),
- dans laquelle ledit au moins un premier canal de masse fondue (10) présente une région de débordement d'ordre zéro (11), qui n'est pas parcourue par la masse fondue, et une région de débordement (12, 13, 14) qui est parcourue par la masse fondue d'au moins une deuxième fente de masse fondue, dans laquelle ledit au moins un premier canal de masse fondue (10) est formé, dans toute la région de débordement d'ordre zéro (11), par des évidements (3, 7) dans les deux parois de limitation (5, 6) de la fente de masse fondue (4),
**caractérisée en ce que**
- la région partielle du premier canal de masse fondue (10), qui est formée uniquement par des évidements (3, 7) dans une de ses deux parois de limitation (5, 6), est au moins la dernière région de débordement.

2. Tête de soufflage de film (1) selon la revendication 1, **caractérisée en ce que** la profondeur (T1, T2) des évidements (3, 7) dans au moins une des deux parois de limitation (5, 6) augmente dans au moins une région partielle (11, 12, 13, 14) dudit au moins un premier canal de masse fondue (10) dans la direction de transport de la masse fondue de ce canal de masse fondue (10).

3. Tête de soufflage de film (1) selon l'une quelconque des revendications précédentes, **caractérisée en ce que** le montant de la variation de la profondeur (T1, T2) des évidements (3, 7) dans les deux parois de limitation (5, 6) sur une hauteur (h) dudit au moins un premier canal de masse fondue (10) est différent dans au moins une région partielle (11, 12, 13, 14) du canal de masse fondue (10), qui n'est pas la région d'extrémité (14), dans la direction de transport de la masse fondue (h) dans le canal de masse fondue (10).

4. Tête de soufflage de film (1) selon la revendication précédente, **caractérisée en ce que** la variation de la profondeur (T1, T2) des évidements (3, 7) dans une des deux parois de limitation (5, 6) dans au moins une partie (11, 12, 13, 14) dudit au moins un premier canal de masse fondue (10), qui n'est pas la partie d'extrémité (14), dans la direction de transport (h) de la masse fondue dans le canal de masse fondue (10) est soumise à une autre fonction que la variation de la profondeur (T1, T2) des évidements (3, 7) respectivement dans l'autre des deux parois de limitation (5, 6).

5. Tête de soufflage de film (1) selon l'une quelconque des revendications précédentes, **caractérisée en ce que** la profondeur (T1, T2) des évidements (3, 7) dans au moins une des deux parois de limitation (5, 6) présente moins de quatre extrema relatifs (16, 17).

6. Tête de soufflage de film (1) selon l'une quelconque des revendications précédentes, **caractérisée en ce que**

- la ligne centrale (21) dudit au moins un premier canal de masse fondue (10), qui indique le milieu de l'extension dudit au moins un canal de masse fondue dans la direction de son extension transversalement, à la direction de transport (23) de la masse fondue dans ladite au moins une fente de masse fondue (4) et transversalement à la direction de transport de la masse fondue dans ledit au moins un premier canal de masse fondue (10),
- ne croise pas, dans au moins une région partielle (11, 12, 13, 14) du tracé du canal de masse fondue entre un maximum (16, 17) de la profondeur (T1, T2) des évidements dans une première paroi de limitation (5, 6) et un maximum (16, 17) de la profondeur des évidements dans la deuxième paroi de limitation restante (5, 6), la ligne centrale de ladite au moins une fente de masse fondue (4),
- qui (18) indique le milieu de l'extension de la fente de masse fondue (4) dans la direction de son extension transversalement à la direction de transport (h) de la masse fondue dans ledit au moins un premier canal de masse fondue (10) et transversalement à la direction de transport (23) de la masse fondue dans la fente de masse fondue (4).

7. Tête de soufflage de film (1) selon l'une quelconque des revendications précédentes, **caractérisée en ce que** ledit au moins un premier canal de masse fondue (10) est formé, également dans la région initiale (12) de la région de débordement, qui se raccorde directement à la région de débordement d'ordre zéro (11), par des évidements (3, 7) dans les deux parois de limitation (5, 6) de la fente de masse fondue (4).

8. Tête de soufflage de film (1) selon la revendication précédente, **caractérisée en ce que**

- ledit au moins un premier canal de masse fondue (10) est formé, également dans la région initiale (12) de la région de débordement (12, 13, 14), qui (12) se raccorde directement à la région de débordement d'ordre zéro (11), par des évidements (3,7) dans les deux parois de limitation (5, 6) de la fente de masse fondue (4), et **en ce que**
- cette région initiale (12) présente une longueur, qui vaut de 10 à 30 %, mais de préférence de 15 à 25 % de la longueur totale dudit au moins un premier canal de masse fondue (10).

9. Tête de soufflage de film (1) selon l'une quelconque des revendications précédentes, **caractérisée en ce que**

- ledit au moins un premier canal de masse fondue (10) est formé, au moins dans une de ses régions partielles (11, 12, 13, 14), par des évidements (3, 7) dans les deux parois de limitation (5, 6) de la fente de masse fondue (4), **en ce que**
- cette région partielle (11, 12, 13, 14) se transforme alors en une région partielle (11, 12, 13, 14), dans laquelle un des deux évidements (3, 7) se rétrécit plus fortement que l'autre (3, 7), et **en ce que**
- dans cette région de rétrécissement, une paroi de limitation (26, 27) d'un premier évidement (3, 7) et une paroi de limitation (26, 27) de l'autre évidement (3, 7) sont alignées l'une avec l'autre.

10. Tête de soufflage de film (1) selon l'une quelconque des revendications précédentes, **caractérisée par** au moins deux fentes de masse fondue avec respectivement deux parois de limitation, qui sont munies d'évidements (3, 7), qui ont respectivement dans la première paroi de limitation une plus grande longueur que dans la deuxième paroi de limitation.

11. Tête de soufflage de film (1) selon la revendication précédente, **caractérisée en ce que** la première paroi de limitation (26, 27) de la première fente de masse fondue présente l'orientation inverse vers la première fente de masse fondue par rapport à la première paroi de limitation (26, 27) de la deuxième fente de masse fondue vers la deuxième fente de masse fondue.

12. Tête de soufflage de film (1) selon la revendication précédente, **caractérisée en ce que**

- la première et la deuxième fentes de masse fondue sont orientées l'une vers l'autre, de telle façon que
- la première paroi de limitation (26, 27) de la première fente de masse fondue frotte sur la première surface du composite de film, et **en ce que**
- la première paroi de limitation (26, 27) de la deuxième fente de masse fondue touche la deuxième surface du composite de film.

**Fig.1**

1

5

6

4

3

20

z

r

**Fig.2**

5

19

3

6

EP 2 648 884 B1

**Fig.3**

# Fig.4

EP 2 648 884 B1

# Fig.5

Fig.6

Fig.7

# Fig.8

Fig.9

**Fig.10**

**Fig.11**

**Fig.12**

3

27

29

24

28

7

28

25

12

α

26

7

28

28

11

25

h

φ

z

EP 2 648 884 B1

**EP 2 648 884 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1055504 B1
- DE 20307412 U1
- US 5716650 B
- US 3809615 A
- US 5716650 A